# EUROPEAN PATENT APPLICATION

(11) **EP 1 829 899 A2**
(43) Date of publication of application: **05.09.2007**
(21) Application number: 07010639.8
(22) Date of filing: 30.06.1999
(51) Int. Cl.: C08F 8/04

(54) **Polyalphaolefins with improved oxidative stability and the process of making thereof**

(30) Priority: 30.06.1998 US 108048
(62) Divisional of application: 99932137.5
(71) Applicant: CHEVRON PHILLIPS CHEMICAL COMPANY LP, Houston, TX 77010 (US)
(72) Inventor: Skledar, Gregg M., Kingwood, TX 77346 (US); Hope, Kenneth D., Kingwood, TX 77339 (US)
(74) Representative: Nash, David Allan

(57) **Abstract**

The present invention relates to a process of producing a highly oxidatively stable polyalphaolefin by hydrogenating a polyolefin to greatly decrease its level of unsaturation.

## Description

### FIELD OF THE INVENTION

The present invention relates to oxidatively stable polyalphaolefins and lubricating composition comprising same. More particularly, the present invention,relates to compositions of lubricants using synthetic polyalphaolefins derived from 1-decene, 1-dodecene or 1-tetradecene olefins which exhibit Improved oxidative stability.

### BACKGROUND OF THE INVENTION

Lubricants today are being called upon to work in ever more demanding applications, In many applications, greater thermal and oxidative performance are necessary to meet rigorous requirements. For instance, today's automobiles tend to have smaller, more demanding engines that operate at higher temperatures. Thus, the engine oil has to function in an increasingly severe environment while meeting fuel economy demands. Besides changes in the additive package, increasingly synthetic base oils are being used instead of conventional mineral oils. Of the synthetic oils, polyalphaolefins (PAO) are among the most popular.

PAO is manufactured by oligomerization of linear alpha olefin followed by hydrogenation to remove unsaturated moieties and fractionation to obtain the desired product slate. 1-decene is the most commonly used alpha olefin in the manufacture of PAO, but 1-dodecene and 1-tetradecene can also be used. PAO's are commonly categorized by the numbers denoting the approximate viscosity in centistokes of the PAO at 100°C. It is known that PAO 2, PAO 2.5, PAO 4, PAO 5, PAO 6, PAO 7, PAO 8, PAO 9 and PAO 10 and combinations thereof can be used in engine oils, gear oils, compressor lubricants, hydraulic fluids and a variety of other applications. The most common of these are PAO 4, PAO 6 and PAO 8.

It has long been known that hydrogenation to achieve a PAO which is predominantly saturated achieves a more desirable product, one that is more stable to oxidation and heat.

Several patents disclose processes for hydrogenating PAO's. These include the following:
Jackson et al. (U.S. Patent No. 4,125,569) discloses a process for hydrogenating polymerized olefins in the presence of alumina and a hydrogenated catalyst to provide a greater hydrogenation rate than what is obtained using the catalyst alone.
Petrillo et al. (U.S. Patent No. 4,167,534) discloses the possibility of generally improving stability to both oxidation and heat as well as specifically improving viscosity index and pour point by including a hydrogenation step to eliminate unsaturations in the process of synthesizing lubricating oils from an n-olefin cut. It does not give any data supporting its general assumption that oxidative stability of the lubricant is improved by decreasing unsaturation.
Degnan et al. (U.S. Patent No. 5,573,657) discloses hydrogenating lubricants using a catalyst based on an ultra-large-pore crystalline material.

With today's automobiles, engine oils and lubricants with high oxidative stability are needed. Various tests to measure oxidative stability are known. These include the Lube Oil Oxidator test, the Rotary Bomb Oxidation Test (RBOT), and the Penn State Microoxidation Test among others. Using such tests, attempts have been made to correlate increased oxidative stability with other components or factors in the oil or lubricant.

Ripple and Fuhrmann in "Performance Comparisons of Synthetic and Mineral Oil Crankcase Lubricant Base Stocks" (Journal of Synthetic Lubricants, 6-3, pp. 209-232, 1989) state that engine oil formulations using synthetic (PAO) base oils provide for superior performance to mineral oils in bench and engine testing as well as field service testing This is due to the fluid's increased oxidative stability, reduced oil consumption, cleaner engines and longer drain capabilities. Specifically, the oxidative stability is supported by reduced viscosity increase. But there is nothing in the paper, which attributes this increase to any specific physical property such as decreased unsaturation as measured by Bromine Index.

Gunsel et al. in "Evaluation of Some Poly-Atpha-Olefins in a Pressurized Penn State Microoxidation Test" (Journal of the Society of Tribologists and Lubrication Engineers, 43, 8, pp. 629-635.1987) compared two PAO's, one with a stated Bromine Index of 1323 and the other with a stated Bromine Index of two. With a Penn State Microoxidation test with two additive packages, phenyl alpha naphthylamine (PAN) and zinc dialkyl dithio phosphate (ZDDP), side by side results of 1% PAN and 1.88% ZDDP/0.5% PAN show that there may be some slight improvement in oxidative stability for PAO having extremely low Bromine Index over PAO having a relatively high Bromine index, but the advantage does not appear significant since there is so much scatter in the data that there ends up being no difference statistically

Even though teachings in the art generally support the presumption that a decrease in unsaturation in the PAO contained in PAO based lubricants will have some improving effect on oxidation stability, when such an effect was actually tested by Gunsel et al., the effect was found to be slight. Therefore, the art is devoid of the significant benefit realized by greatly hydrogenating PAO's to increase oxygen stability in PAO based lubricants.

### SUMMARY OF THE INVENTION

The present invention relates to a highly oxidative stable polyalphaolefin method of producing a highly oxidatively stable polyalphaolefin comprising the step of hydrogenating a polyalphaolefin to a level of hydrogenation in which a Bromine Index of less than 200 mg Bromine per 100 gram sample of polyalphaolefin is achieved. In more preferred embodiments, the present invention relates to the above method in which a Bromine Index of less than 100 mg Bromine per 100 gram sample of polyalphaolefin is achieved, a Bromine Index of less than 50 mg Bromine per 100 gram sample of polyalphaolefin is achieved, and a Bromine Index of less than 25 mg Bromine per 100 gram sample of polyalphaolefin is achieved.

In another embodiment, the present invention relates to a lubricating composition comprised of the highly oxidative stable polyalphaolefin. The present invention and the benefits realized in its practice, is based at least in part on the recognition that by going to near complete hydrogenation, one achieves a surprising improvement in oxidative stability for polyalphaolefins,

### DESCRIPTION OF THE FIGURE

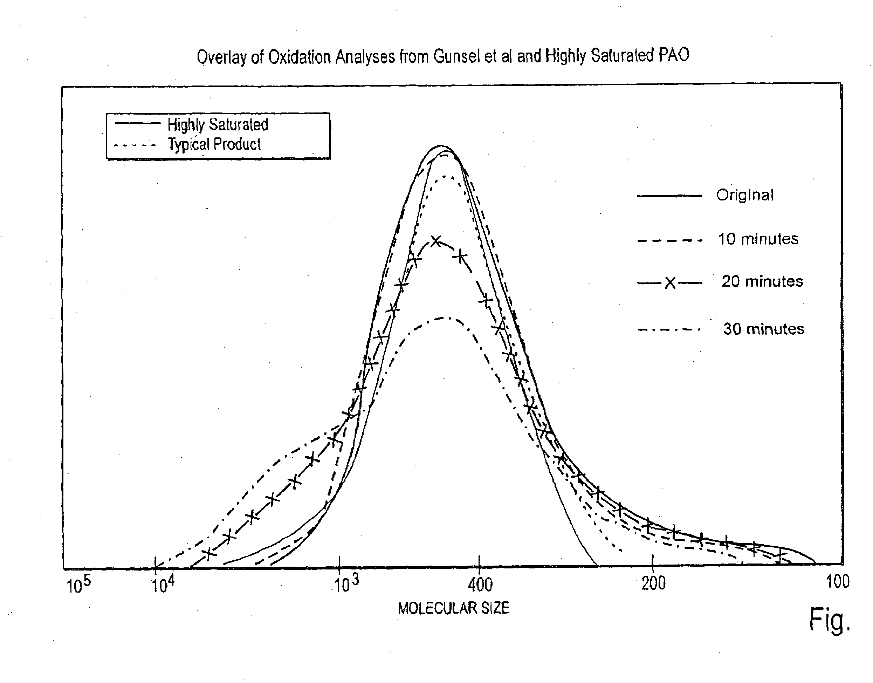

The Figure of the Drawing plots the results of experiments showing oxidation overtime in a Penn State Microoxidation Test of two PAO's (a typical moderately hydrogenated PAO and a highly saturated product) along with results given in Gunsel et al. The GPC data, which has been analyzed by the inventors, has been modified to fit the scale of Figure 2 in Gunsel et al.

### DETAILED DESCRIPTION OF THE INVENTION

investigators continue to search for ways to increase oxidation stability in PAO's. The inventors in the present application have found a surprising increase in oxidative stability as a result of hydrogenating PAO's to decrease unsaturation to a Bromine Index below 200. The Bromine Index (ASTM D 2710) is the number of milligrams of Bromine that react with 100 grams of sample under the conditions of the test. In contrast, the Bromine Number method (ASTM D 1159), as mentioned in Petrillo et at. (U.S. Patent No. 4,167,534) is the number of grams that react with 100 grams of sample under the conditions of the test. Therefore, there is a natural factor of 1000 difference between the two methods. This increase in oxidative stability is measured with both Rotary Bomb Oxidation Test (RBOT) (ASTM D 2272) and Lube Oil Oxidator tests. The degree of increase of oxidative stability conferred by the hydrogenation step is far beyond what would be expected from previous teachings in the art.

The Bromine Index method, ASTM D 2710, was developed to determine the degree of unsaturation in petroleum hydrocarbons, such as cumenes, reformates and kerosenes. Nevertheless, it has historically been utilized as a measure for the degree of unsaturation for PAO's. The chemical structure of PAO differs from the aforementioned petroleum hydrocarbons in terms of the degree of branching and therefore there is a greater steric hindrance to the bromination reaction for PAO. In addition, PAO is limited in solubility in the test solvent, which creates problems with accuracy and repeatability. Therefore, the Bromine Index method has been modified from the original ASTM D 2710 specifically for PAO and is designated as K801.

The present inventors have found specific modifications useful in increasing the accuracy and repeatability and decreasing the level of detection for PAO measurements. The modifications have been to utilize isopropanol as an additional solvent and operate at higher temperatures to aid solubility as well as take blank measurements for each titration solvent. In addition, the present inventors have also identified that it is preferred to utilize a specific instrument vendor (Mettler) for the Bromine Index apparatus. This has resulted in improvements in both accuracy and repeatabiiity based upon measurement standards for PAO.

The present inventors used the above modifications to the original Bromine Index method to more accurately determine Bromine Index of a moderately hydrogenated PAO product and a highly saturated product and then determined oxidative stability of these products using the Penn State Microoxidation method under the same equipment and under the same conditions as in Gunsel et al.'s Figure 2, as described in Example 11 hereafter. The present inventors found that the oxidative stability of both a moderately hydrogenated PAO product (having a Bromine Index of 433 measured with the modified method) and a highly saturated PAO product (with a Bromine Index of 0.95 measured with the modified method) was significantly better than the oxidative stability of Gunsel et al.'s Fluid B (a PAO fluid having a stated Bromine Index of 2 measured by the unmodified Bromine Index method). Thus, Gunsel et al.'s hydrogenated PAO (Fluid 2) was not nearly as oxidatively stable as either a typical hydrogenated PAO product with a Bromine Index of 433 or a highly saturated PAO product with a Bromine index of 0.95 in accordance with the present invention, as measured by the improved Bromine Index measurement methods.

The present inventors have also found that when they hydrogenate the PAO twice, both before and after a distillation step, they achieve a better result in both the RBOT and Lube Oil Oxidator tests than they do when only one hydrogenation step is performed with a distillation step.

In its broadest aspect, the present invention involves improving thermal oxidative stability by hydrogenating PAO's especially those derived from 1-decene, 1-dodecene or 1-tetradecene as a base oil. The level of hydrogenation preferably approaches the removal of all unsaturation, but is at least to a level such that the Bromine index is less than 200 mg Bromine per 100 gram of polyalphaolefin.

The PAO's described in the present invention can be used, as in the following non-limiting examples, as engine oil lubricant, gear lubricant, hydraulic lubricant, compressor lubricant, aerospace jet lubricant, fiber optic cable gel, synthetic grease, and dielectric fluid.

The present invention also relates to a method of producing a highly oxidatively stable polyalphaolefin comprising the step of hydrogenating polyalphaolefin to a level of hydrogenation in which an RBOT level of at least 2200 minutes is achieved when diphenyl amine is used as an antioxidant. This is illustrated in Examples 1-8.

The present invention also relates to a method of producing a highly oxidatively stable polyalphaolefin comprising the step of hydrogenating polyalphaolefin to a level of hydrogenation in which a Lube Oil Oxidator level of at least 45 hours is achieved when pressures between 100 and 2500 psi are applied. This is illustrated in Examples 9 and 10.

The present invention also relates to a method comprising distilling the polyalphaolefin to remove impurities, then hydrogenating the polyalphaolefin to achieve a final polyalphaolefin product having a Bromine Index of less than 200 mg Bromine per 100 gram sample of polyalphaolefin. This is illustrated in Example 9.

The present invention also relates to a method comprising a preliminary step of hydrogenating the polyalphaolefin followed by distilling to remove impurities, followed by a hydrogenating step to achieve a final polyalphaolefin product having a Bromine Index of less than 200 mg Bromine per.100 gram sample of polyalphaolefin. This is illustrated in Example 10, and is a preferred embodiment of the present invention.

### ADDITIVE COMPONENTS

The following additive components are examples of some components that can be favorably employed in the preparation of the lubricating composition in accordance with the present invention. These examples of additives are provided to illustrate the present invention, but they are not intended to limit it:
(1) Metal detergents: sulfurized or unsulfurized alkyl or alkenyl phenates, alkyl or alkenyl aromatic sulfonates, sulfurized or unsulfurized metal salts of multi-hydroxy alkyl or alkenyl aromatic compounds, alkyl or alkenyl hydroxy aromatic sulfonates, sulfurized or unsulfurized alkyl or alkenyl naphthenates, metal salts of alkanoic acids, metal salts of an alkyl or alkenyl multi-acid, metal salts of an alkyl salicylic acid, carboxylates, overbased detergents and chemical and physical mixtures thereof.
(2) Ashless dispersants: alkenyl succinimides, alkenyl succinimides modified with other organic compounds, and alkenyl succinimides modified with boric acid, alkenyl succinic ester.
(3) Oxidation inhibitors:
   (a) Phenol type oxidation inhibitors: 4,4'-methylenebis (2,6-di-tertbutylphenol), 4,4'-bis(2,6-di-tert-butylphenol), 4,4'-bis(2-methyl-6-tert-butylphenol), 2,2'-(methylene bis (4-methyl-6-tert-butyl-phenol), 4,4-butylidenebis(3-methyl-6-tert-butylphenol), 4,4'-isopropylidenebis(2,6-di-tert-butylpftenot), 2,2'-methylenebis(4-methyl-6-nonylphenol), 2,2'-isobutylidene-bis(4,6-dimethylphenol), 2,2'-methylenebis(4-methyl-6-cyclohexylphenol), 2,6-di-tert-butyl-4-methyl-phenol, 2,6-di-tert-butyl-4-ethylphenol, 2,4-dimethyl-6-tert-butyl-phenol, 2,6-di-tert-4-(N,N' dimethylaminomethylphenol), 4,4'-thiobis(2-methyl-6-tert-butylphenol), 2,2'-thiobis(4-methyl-6-tert-butylphenol), bis(3-methyl-4-hydroxy-5-tert-butylbenzyl)-sulfide, and bis (3,5-di-tert-butyl-4-hydroxyhenzyl).
   (b) Diphenylamine type oxidation inhibitor: alkylated diphenylamine, phenyl-1-naphthylamine, and alkylated 1-naphthylamine.
   (c) Other types: metal dithiocarbamate (e.g., zinc dithiocarbamate), and methylene bis (dibutyl dithio carbamate).
(4) Rust inhibitors (Anti-rust agents):
   (a) Nonionic polyoxyethylene surface active agents: polyoxyethylene lauryl ether, polyoxyethylene higher alcohol ether, polyoxyethylene nonylphenyl ether, polyoxyethylene octylphenyl ether, polyoxyethylene octyl stearyl ether, polyoxyethylene oleyl ether, polyoxyethylene sorbitol monostearate, polyoxyethylene sorbitol mono-oleate, and polyethylene glycol monooleate.
   (b) Other compounds: stearic acid and other fatty acids, dicarboxylic acids, metal soaps, fatty acid amine salts, metal salts of heavy sulfonic acid, partial carboxylic acid ester of polyhydric alcohol, and phosphoric ester.
(5) Demulsifiers: addition product of alkylphenol and ethylene oxide, polyoxyethylene alkyl ether, and polyoxyethylene sorbitan ester.
(6) Extreme pressure agents (EP agents): zinc dithiophosphates, zinc dithiocarbamates, zinc dialkyl dithiophosphate (primary alkyl type & secondary alkyl type), zinc diaryl dithiophosphate, sulfurized oils, diphenyl sulfide, methyl trichlorostearate, chlorinated naphthalene, fluoroalkylpolysiloxane, and lead naphthenate.
(7) Friction modifiers: fatty alcohol, fatty acid, amine, borated ester, and other esters.
(8) Multifunctional additives: sulfurized oxymolybdenum dithiocarbamate, sulfurized oxymolybdenum organo phosphoro dithioate, oxymolybdenum monoglyceride, oxymolybdenum diethylate amide, amine-molybdenum complex compound, and sulfur-containing molybdenum complex compound.
(9) Viscosity index improvers: polymethacrylate type polymers, ethylenepropylene copolymers, styrene-isoprene copolymers, hydrated styrene-isoprene copolymers, polyisobutylene, and dispersant type viscosity index improvers.
(10) Pour point depressants: polymethyl methacrylate.
(11) Foam Inhibitors: alkyl methacrylate polymers and dimethyl silicone polymers.

In one embodiment, an engine lubricating oil composition would contain:
(a) a major part of a base oil of lubricating viscosity, wherein the base oil comprises 1-dodecene and/or 1-tetradecene-derived polyalphaolefins;
(b) 0% to 20% of at least one ashless dispersant;
(c) 0% to 30% of the detergent;
(d) 0% to 5% of at least one zinc dithiophosphate;
(e) 0% to 10% of at least one oxidation inhibitor;
(f) 0% to 1% of at least one foam inhibitor; and
(g) 0% to 20% of at least one viscosity index improver.

In a further embodiment, an engine lubricating oil composition is produced by blending a mixture of the above components. The lubricating oil composition produced by that method might have a slightly different composition than the initial mixture, because the components may interact. The components can be blended in any order and can be blended as combinations of components.

### ADDITIVE CONCENTRATES

The use of additive concentrates is also included within the scope of this invention. The concentrates of this invention comprise the compounds or compound mixtures of the present invention, with at-least one of the additives disclosed above. Typically, the concentrates contain sufficient organic diluent to make them easy to handle during shipping and storage.

From 20% to 80% of the concentrate is organic diluent. Suitable organic diluents which can be used include for example, solvent refined 100N, i.e., Cit-Con 100N, and hydrotreated 100N, i. e., RLOP 100N, and the like. The organic diluent preferably has a viscosity of from about 1 to about 20 cSt at 100°C.

For the avoidance of doubt, this application relates to the following aspects.

A first aspect which is a method of producing a high oxidative stability polyalphaolefin comprising the step of hydrogenating polyalphaolefin to a level of hydrogenation in which a Bromine Index of less than 200 mg Bromine per 100 gram sample of polyalphaolefin is achieved.

In this first aspect of the invention, a Bromine Index of less than 100 mg Bromine per 100 gram sample of polyalphaolefin may be achieved.

In this first aspect of the invention, a Bromine Index of less than 50 mg Bromine per 100 gram sample of polyalphaolefin may be achieved.

In this first aspect of the invention, a Bromine Index of less than 25 mg Bromine per 100 gram sample of polyalphaolefin may be achieved.

In an embodiment of this first aspect of the invention, the PAO may be distilled prior to hydrogenation.

In an embodiment of this first aspect of the invention, the PAO may be hydrogenated and distilled prior to the hydrogenation to a Bromine Index of less than 200.

In an embodiment of this first aspect of the invention, the method may further comprise distilling the polyalphaolefin to remove impurities before the hydrogenating step. In this embodiment, a Bromine Index of less than 100 mg Bromine per 100 gram sample of polyalphaolefin may be achieved, or a Bromine Index of less than 50 mg Bromine per 100 gram sample of polyalphaolefin may be achieved, or a Bromine Index of less than 25 mg Bromine per 100 gram sample of polyalphaolefin may be achieved.

In another embodiment of the first aspect of the invention, the method may further comprise distilling the polyalphaolefin to remove impurities before the hydrogenating step and a preliminary hydrogenating of the polyalphaolefin before the distilling step. In this embodiment, a Bromine Index of less than 100 mg Bromine per 100 gram sample of polyalphaolefin may be achieved, or a Bromine Index of less than 50 mg Bromine per 100 gram sample of polyalphaolefin may be achieved, or a Bromine Index of less than 25 mg Bromine per 100 gram sample of polyalphaolefin may be achieved.

A second aspect which is a lubricant composition comprising a polyalphaolefin having a Bromine Index of less than 200 mg Bromine per 100 gram sample of polyalphaolefin.

The composition of this second aspect of the invention may have a Bromine Index of less than 100 mg Bromine per 100 gram sample of polyalphaolefin, or may have a Bromine Index of less than 50 mg Bromine per 100 gram sample of polyalphaolefin, or may have a Bromine Index of less than 25 mg Bromine per.100 gram sample of polyalphaolefin.

The composition of this second aspect of the invention may be an engine oil lubricant, a gear lubricant, an hydraulic lubricant, a compressor lubricant, an aerospace jet lubricant, a fiber optic cable gel, a synthetic grease or a dielectric fluid.

A third aspect which is a method of producing a highly oxidatively stable polyalphaolefin comprising the step of hydrogenating polyalphaolefin to a level of hydrogenation in which an RBOT level of at least 2200 minutes is achieved when diphenyl amine is used as an antioxidant.

A fourth aspect which is a method of producing a highly oxidatively stable polyalphaolefin comprising the step of hydrogenating a polyalphaolefin to a level of hydrogenation in which a Lube Oil Oxidator level of at least 45 hours is achieved when pressures between 350 and 2500 psi are applied.

### EXAMPLES

The invention will be further illustrated by following examples, which set forth particularly advantageous method embodiments While the Examples are provided to illustrate the present invention, they are not intended to limit it.

Examples 1 through 4 are comparative examples, which show typical oxidative stability results for the described materials. Examples 5 through 8 are intended to show the advantages of the present invention.

### Example 1

A commercial sample of Chevron 4 cSt polyalphaolefin Synfluid® obtained and subjected to RBOT (ASTM D 2272), the aforementioned modified Bromine Index and Lube Oil Oxidator measurements. The Lube Oil Oxidator measurement is an oxygen uptake test wherein the amount of time is measured until one liter of oxygen is consumed by the sample under the conditions of the test. Under the conditions of the test, the sample is formulated with an oxidation catalyst to promote oxidation and an antioxidant at a controlled temperature and pressure. The RBOT test is an oxygen uptake test, which monitors pressure changes in a sample bomb at elevated.
temperature and pressure in the presence of a copper oxidation catalyst. The results are shown in Table 1.

**TABLE 1**

| Example | PAO Grade | RBOT*, min | Lube Oil Oxidator, hrs | Bromine Index |
|---|---|---|---|---|
| 1 | 4 | 1267 | 16 | 682 |
| 2 | 6 | 826 | 16 | 433 |
| 3 | 5 | 1883 | 27 | 172 |
| 4 | 7 | 1918 | 25 | 108 |
| 5 | 4 | 2214 | 48 | 2.6 |
| 6 | 6 | 1905 | >50 | 1.6 |
| 7 | 5 | 2233 | 57 | 10 |
| 8 | 7 | 2217 | 44 | 5 |

| | | | | |
|---|---|---|---|---|
| *All of the samples for RBOT were formulated with 0.5 weight percent of Uniroyal's Naugalube® 640 antioxidant. | | | | |

### Example 2

The procedure of Example 1 was repeated except 6 cSt polyalphaolefin was utilized instead of 4 cSt polyalphaolefin. The results are shown in Table 1.

### Example 3

The procedure of Example 1 was repeated except 5 cSt polyalphaolefin was utilized instead of 4 cSt polyalphaolefin. The results are shown in Table 1.

### Example 4

The procedure of Example 1 was repeated except 7 cSt polyalphaolefin was utilized instead of 4 cSt polyalphaolefin. The results are shown in Table 1.

### Example 5

A sample of Chevron 4 cSt polyalphaolefin Synfluid® was subjected to an additional hydrogenation step at 1500 psig. The resultant material was subjected to RBOT (ASTM D 2272), the aforementioned modified Bromine Index and Lube Oil Oxidator measurements. The Lube Oil Oxidator measurement is an oxygen uptake test wherein the amount of time is measured until one liter of oxygen is consumed by the sample under the conditions of the test. The results are shown in Table 1.

### Example 6

The procedure of Example 5 was repeated except 6 cSt polyalphaolefin was utilized instead of 4 cSt polyalphaolefin. The results are shown in Table 1.

### Example 7

The procedure of Example 5 was repeated except 5 cSt polyalphaolefin was utilized instead of 4 cSt polyalphaolefin and the hydrogenation pressure was 1000 psig of hydrogen. The results are shown in Table 1.

### Example 8

The procedure of Example 5 was repeated except 7 cSt polyalphaolefin was utilized instead of 4 cSt polyalphaolefin. The results are shown in Table 1.

### Example 9

A crude polyalphaolefin was taken prior to hydrogenation. The material was subjected to distillation to provide 4 cSt and 6 cSt viscosity products at 100°C, then hydrogenated at 1000 psig. The material was the tested by the Lube Oil Oxidator method. The results are shown in Table 2. The 4 cSt fluid is listed as Example 9a and the 6 cSt fluid is listed as Example 9b.

### Example 10

The procedure of Example 9 was repeated except an additional hydrogenation step was carried out prior to the distillation step. The material was the tested by the Lube Oil Oxidator method. The results are shown in Table 2. The 4 cSt fluid is listed as Example 10a and the 6 cSt fluid is listed as Example 10b.

**TABLE 2**

| **Example** | **Lube Oil Oxidator, hrs** |
|---|---|
| 9a | 46 |
| 9b | 42 |
| 10a | 30 |
| 10b | 30 |

### Example 11

Experiments were performed using the Penn State Microoxidation test methods described in Gunsel et al to compare oxidation over time of typical moderately hydrogenated PAO (Bromine Index is 433) and highly saturated PAO product (Bromine Index is 0.95) with the data described in Gunsel et al with regard to Fluid B (stated Bromine Index = 2). The results are plotted in the Figure and show that compared to the results of Fluid B of Gunsel et al., there is substantially less formation of high molecular weight product for either the typical moderately hydrogenated PAO or the highly saturated PAO in a Penn State Microoxidation test for PAO's containing 1% phenyl alpha naphthyl amine (PAN). The Microoxidation test was performed in the identical equipment used by Gunsel et at at Pennsylvania State University. The test procedure was performed at 225°C and at atmospheric pressure as described in Figure 2 of Gunsel et al. The GPC analysis was performed under the same conditions as in Gunsel et al.

These results definitively show that the.PAO described in Gunsel et al. as having a Bromine Index of 2 is a material which lacks the oxidative stability of the PAO of the present invention. In fact, the PAO described in Gunsel et al. exhibits less oxidative stability than the moderately hydrogenated PAO (Bromine Index = 433). The effect of saturation of PAO's on oxidative stability is significantly and unexpectedly greater than what is taught in Gunsel et al. This also shows that the Bromine Index of 2 in Fluid B reported by Gunsel et at. is incorrect when specifically tested using modifications of the Bromine Index method which resolve limitations in the capability of measuring low Bromine Indices.

While the present invention has been described with reference to specific embodiments, this application is intended to cover those various changes and substitutions that may be made by those skilled in the art without departing from the spirit and scope of the appended claims.

## Claims

1. A method of producing a highly oxidatively stable polyalphaolefin comprising the step of hydrogenating a polyalphaolefin to a level of hydrogenation in which an RBOT level of at least 2200 minutes is achieved when diphenyl amine is used as an antioxidant.

2. A method of producing a highly oxidatively stable polyalphaolefin comprising the step of hydrogenating a polyalphaolefin to a level of hydrogenation in which a Lube Oil Oxidator level of at least 45 hours is achieved when pressures between 350 and 2500 psi are applied.

3. A method according to claim 1 or 2, wherein the polyalphaolefin is derived from 1-decene, 1-dodecene, or 1-tetradecene.

4. A highly oxidatively stable polyalphaolefin obtainab(e by the method of any of claims 1, 2 or 3.

5. A lubricant composition comprising the highly oxidatively stable polyalphaolefin of claim 4.

6. A method of producing a highly oxidatively stable polyalphaolefin, comprising the steps of:
a) hydrogenating a polyalphaolefin;
b) distilling the hydrogenated polyalphaolefin; and
c) hydrogenating the distilled polyalphaolefin.

7. The method of claim 6, wherein the polyalphaolefin is derived from 1-decene, 1-dodecene, or 1-tetradecene.

8. A highly oxidatively stable polyalphaolefin obtainable by the method of claim 6 or 7.

9. A lubricant composition comprising the highly oxidatively stable polyalphaolefin of claim 8.

10. A highly oxidatively stable polyalphaolefin according to claim 4 or 8 for use as engine oil lubricant, gear lubricant, hydraulic lubricant, compressor lubricant, aerospace jet lubricant, fiber optic cable gel, synthetic grease, or dielectric fluid.

11. A method of producing a highly oxidatively stable polyalphaolefin comprising the step of hydrogenating polyalphaolefin to a level of hydrogenation in which a Bromine Index of less than 200mg Bromine per 100 gram sample of polyalphaolefin is achieved.

12. A lubricant composition comprising a polyalphaolefin having a Bromine Index of less than 200mg Bromine per 100 gram sample of polyalphaolefin.
